# FASCICULE DE BREVET EUROPEEN

(11) **EP 2 084 515 B1**
(45) Date de publication et mention de la délivrance du brevet: **11.07.2018**
(21) Numéro de dépôt: 07870317.0
(22) Date de dépôt: 21.11.2007
(51) Int. Cl.: G01N 21/64

(54) **DISPOSITIF POUR LA DETECTION EXALTEE DE L'EMISSION D'UNE PARTICULE CIBLE**
VORRICHTUNG ZUR ERHOBENEN ERKENNUNG DER EMISSION EINES ZIELPARTIKELS
DEVICE FOR THE EXALTED DETECTION OF THE EMISSION OF A TARGET PARTICLE

(30) Priorité: 21.11.2006 FR 0610178
(43) Date de publication de la demande: 05.08.2009
(73) Titulaire: Centre National de la Recherche Scientifique (C.N.R.S.), 75794 Paris Cedex 16 (FR); Université d'Aix-Marseille, 13284 Marseille Cedex 07 (FR)
(72) Inventeur: RIGNEAULT, Hervé, 13600 La Ciotat (FR); LENNE, Pierre-François, 13006 Marseille (FR); WENGER, Jérôme, 13170 Les Pennes Mirabeau (FR); POPOV, Evgueni, 13012 Marseille (FR); EBBESEN, Thomas, 6700 Strasbourg (FR)
(74) Mandataire: Novagraaf Technologies
(86) Numéro de dépôt international: PCT/FR2007/001913
(87) Numéro de publication internationale: WO 2008/074938

(56) Documents cités:
- WO-A1-2007/045755
- US-A1- 2005 214 160
- US-A1- 2006 060 766
- MALLARD F ET AL: "Opto-electronic DNA chip: high performance chip reading with an all-electric interface" BIOSENSORS & BIOELECTRONICS, ELSEVIER SCIENCE PUBLISHERS, BARKING, GB, vol. 20, no. 9, 15 mars 2005 (2005-03-15), pages 1813-1820, XP004727605 ISSN: 0956-5663 cité dans la demande
- RIGNEAULT H ET AL: "Enhancement of single-molecule fluorescence detection in subwavelength apertures" PHYSICAL REVIEW LETTERS, vol. 95, 9 septembre 2005 (2005-09-09), pages 117401-1-117401-4, XP002441367 USA cité dans la demande
- GENET C ET AL: "Light in tiny holes" NATURE, NATURE PUBLISHING GROUP, LONDON, vol. 445, 4 janvier 2007 (2007-01-04), pages 39-46, XP008080993 ISSN: 0028-0836
- ISHI T ET AL: "SI NANO-PHOTODIODE WITH A SURFACE PLASMON ANTENNA" JAPANESE JOURNAL OF APPLIED PHYSICS, JAPAN SOCIETY OF APPLIED PHYSICS, TOKYO, JP, vol. 44, no. 12-15, 2005, pages L364-L366, XP001236929 ISSN: 0021-4922
- DEGIRON A AND EBBESEN T W: "Analysis of the transmission process through single apertures surrounded by periodic corrugations" OPTICS EXPRESS, vol. 12, 9 août 2004 (2004-08-09), pages 3694-3700, XP002441368 USA

## Description

L'invention se rapporte à un dispositif pour la détection de l'émission d'une particule cible à une longueur d'onde d'émission, ledit dispositif comprenant :
- un photo-détecteur comprenant une surface sensible de détection de fort indice optique;
- ladite particule cible pouvant être positionnée au voisinage de ladite surface sensible dans un milieu d'analyse de faible indice optique.

Un tel dispositif est connu de la publication « Opto-electronic DNA chip : high performance chip reading with an all-electric interface », Frédéric Mallard et al., Biosensors & Bioelectronics, 20 (2005) 1813-1820. Cette publication enseigne une matrice de photo-détection du type CMOS utilisée pour recevoir des sondes par greffage, les sondes pouvant recevoir des molécules cibles d'ADN par hybridation. De telles molécules cibles d'ADN peuvent s'hybrider sur la surface de la matrice à l'aide de sondes positionnées sur la surface de la matrice. Les sondes sont adaptées pour recevoir les molécules cibles d'ADN à détecter. Une fois les molécules cibles d'ADN positionnées sur les sondes par hybridation et rinçage de façon connue en soi, la publication susmentionnée enseigne de détecter l'émission des particules cible à l'aide de la matrice de photo-détection.

Dans le dispositif susmentionné, après greffage, les sondes sont alignées au niveau de la surface externe du photo-détecteur. Pour un milieu d'analyse comprenant les sondes de faible indice optique, et un photo-détecteur de fort indice optique, les lois de Snells-Descartes indiquent qu'il est possible d'obtenir une détection de l'émission des particules dans le photo-détecteur de fort indice optique.

L'avantage du dispositif susmentionné est qu'il permet d'améliorer la sensibilité de la détection par rapport aux systèmes connus de détection en champ lointain par une caméra du fait du large angle solide sous lequel les particules voient le photo-détecteur.

Toutefois, la sensibilité du dispositif n'est toujours pas satisfaisante, et il est avantageux d'améliorer encore la sensibilité d'un tel dispositif, c'est-à-dire d'augmenter la quantité de signal d'émission des particules cible collecté dans le photo-détecteur.

D'autres documents dans le domaine technique apportent des informations sur différents aspects relatives aux biopuces intégrées : US 2005/0214160 A1 ; WO 2007/045755 A1 ; H. Rigneault et al. Phys. Rev. Lett 95 (2005) 117401 ; F. Mallard et al. Biosens. Bioelectron. 20 (2005) 1813-1820 ; C. Genet et T.W. Ebbesen, Nature 445 (2007) 39-46. L'invention a notamment pour objet d'améliorer le dispositif tel que précédemment décrit dans le but d'obtenir une meilleure sensibilité.

Pour ce faire, l'invention concerne un dispositif d'après les caractéristiques techniques de la revendication 1.

Selon l'invention, par exemple lorsqu'une une sonde est greffée au dispositif au voisinage de la surface sensible dans le trou, et qu'une particule cible est hybridée sur la sonde, le signal optique émis par la particule cible est confiné, ce qui permet d'améliorer la quantité de signal collecté.

Plus précisément, il a été démontré, dans le cas de la détection de la fluorescence en champ lointain, que la présence de trous ou de nanotrous permet de retarder la saturation de la fluorescence, tout en augmentant l'intensité d'excitation locale dans le trou et le rendement radiatif de fluorescence, ce qui améliore le taux de fluorescence par particule cible. La publication « Enhancement of Single-Molecule Fluorescence Détection in Subwavelength Apertures », Rigneault et al., Physical Review Letters, 11, 117401 2005, illustre ce phénomène. Toutefois, ce résultat n'est fourni dans la publication ci-dessus que pour une détection en champ lointain.

Selon l'invention, l'exaltation de l'émission et de la détection des particules cibles est réalisée pour une détection en champ proche, c'est-à-dire typiquement pour une distance entre la particule cible hybridée à une sonde greffée et la surface sensible du photo-détecteur inférieur à la longueur d'onde d'émission de la particule cible.

L'avantage du masque est également que la taille des trous peut être réduite librement jusqu'à atteindre des diamètres inférieurs à la longueur d'onde d'émission des particules cibles. Ceci peut permettre d'obtenir des fortes densités d'émission par unité de surface tout en permettant la détection de particules individuelles.

En outre, la détection par le photo-détecteur est encore améliorée, selon l'invention, grâce à au moins un sillon positionné au niveau d'une interface du masque, chacun desdits au moins un sillon entourant chacun desdits au moins un trou.

Dès lors, selon l'invention, les sillons forment un réseau de corrugation de forme circulaire et ont le double effet d'exalter encore plus la lumière émise par les particules cibles et de diriger la lumière émise par la particule cible dans une ou plusieurs directions de l'espace. La directivité de l'émission et la quantité de signal collecté sont donc améliorées. De la sorte, la sensibilité du photo-détecteur est meilleure.

Par ailleurs, lorsque la particule est excitée par un faisceau d'excitation et que le sillon est positionné à l'interface entre le masque et le milieu d'analyse, le dispositif améliore l'efficacité de l'excitation en orientant sensiblement le faisceau d'excitation vers le trou et donc vers la particule à exciter.

L'effet physique permettant d'obtenir ces résultats est un couplage au mode plasmon au niveau de l'interface comprenant le sillon. Par ce couplage plasmonique, la lumière est dirigée et exaltée.

Des modes de réalisation avantageux de l'invention sont présentés dans les revendications dépendantes.

De façon connue, par exemple de la publication de Mallard précitée, le photo-détecteur est découpé en pluralité de pixels. Ces pixels forment de façon connue des unités de détection dans lesquelles on peut détecter individuellement le signal électrique émis par la transformation photo-électrique.

Dans ce photo-détecteur découpé en pixels, il se pose un problème particulier dans le cadre de la détection de l'émission de particules cibles.

En effet, au sein du photo-détecteur de fort indice optique, le signal émis par la particule cible d'un milieu de faible indice optique, et placée sur l'interface avec le photo-détecteur de fort indice optique, présente des lobes d'émission, de sorte qu'une même particule génère un signal dans plusieurs pixels du photo-détecteur à la fois. Le signal détecté par un pixel ne correspond donc pas réellement au signal émis par une particule cible. Cet effet néfaste est connu sous le nom de « cross-talk » en langue anglaise, ou diaphonie en langue française.

Un mode de réalisation de l'invention vise à réduire la diaphonie dans un photo-détecteur tel que précédemment défini et comprenant une pluralité de pixels.

Pour ce faire, le photo-détecteur comprend une pluralité de pixels, et dans lequel lesdits trous ont une dimension inférieure à la dimension des pixels de ladite pluralité de pixels, et ledit masque est agencé par rapport audit photo-détecteur de sorte que chacun desdits au moins un trou soit positionné en regard d'un pixel de ladite pluralité de pixels.

De la sorte, le signal émis par une particule cible greffée à la sonde dans le trou est confiné par le trou et dirigé de façon préférentielle dans le pixel. Ceci évite que des particules cibles émettent dans plusieurs pixels. La diaphonie entre des pixels adjacents est donc réduite et les pixels photosensibles sont efficacement isolés des particules cibles libres non greffées aux sondes.

L'amélioration de la directivité du signal est en outre particulièrement avantageuse dans le cadre d'un photo-détecteur selon ce mode de réalisation, puisque ceci réduit également la diaphonie telle que précédemment définie.

Par ailleurs, afin d'améliorer le confinement dans le trou, ledit masque est un film métallique percé de trous. Ceci permet d'obtenir l'opacité requise pour le masque pour la longueur d'onde d'émission de la particule cible.

Par ailleurs, ladite particule cible est apte à émettre à ladite longueur d'onde d'émission lorsqu'elle est excitée par un faisceau d'excitation émis par des moyens d'excitation et ladite surface sensible est telle qu'elle est insensible audit faisceau d'excitation.

Des particules devant être excitées optiquement pour émettre de la lumière sont appelées particules fluorescentes. Dans le cas de telles particules fluorescentes, le signal d'excitation est souvent gênant pour la détection de l'émission de fluorescence.

Grâce au mode de réalisation ci-dessus, le signal d'émission ne gène pas la détection au niveau du photo-détecteur, et n'influence pas le calcul de l'émission détectée.

Dans ce cas, le sillon peut être positionné dans le trajet du faisceau d'excitation.

Selon un mode de réalisation, la surface sensible est rendue insensible au signal d'émission par l'intermédiaire d'un filtre réjecteur positionné entre lesdits moyens d'excitation et ladite surface sensible, ledit filtre réjecteur étant agencé pour rejeter les longueurs d'onde du signal d'excitation.

De la sorte, seule l'émission des particules est détectée au niveau du photo-détecteur, même si une excitation est nécessaire pour détecter l'émission.

Dans ce cas, le sillon peut être avantageusement positionné à l'interface entre la zone opaque et le filtre réjecteur.

Par ailleurs, dans un photo-détecteur connu, par exemple dans la publication de Mallard susmentionnée, les sondes sont réparties sur la surface du photo-détecteur, et la mesure du signal détecté est réalisé en moyennant le signal reçu sur l'ensemble des sondes. Cet effet de moyenne d'ensemble mené sur une grande population nuit toutefois à la qualité des résultats.

Afin de pallier cet inconvénient, selon un mode de réalisation de l'invention, ledit masque est tel que chacun desdits au moins un trou ne peut recevoir qu'une unique sonde.

De la sorte, avec des trous très petits ne contenant qu'une sonde, il est possible de réaliser des mesures en régime d'émission par des molécules individuelles. On diminue donc de la sorte l'effet de moyenne susmentionné.

L'invention concerne également une bio-puce comprenant un dispositif tel que précédemment décrit.

La bio-puce peut comprendre au moins une sonde greffée audit photodétecteur, ladite sonde étant positionnée dans ledit au moins un trou.

Selon un mode de réalisation, chacun desdits au moins un trou comprend une unique sonde.

La bio-puce peut également comprendre au moins une particule cible hybridée à ladite sonde.

L'invention concerne également un procédé de détection de l'émission d'une particule cible à une longueur d'onde d'émission comprenant des étapes consistant à:
- fournir un dispositif tel que précédemment décrit;
- positionner ladite particule dans ledit au moins un trou ;
- détecter l'émission de ladite particule à l'aide dudit photo-détecteur.

Le procédé peut également comprendre des étapes consistant à :
- greffer au moins une sonde dans ledit au moins un trou ;
- hybrider ladite particule cible sur ladite sonde de sorte à positionner sélectivement ladite particule cible dans ledit trou.

On comprendra mieux l'invention à l'aide de la description détaillée d'au moins un mode de réalisation ci-dessous en référence aux figures annexées dans lesquelles :
- FIG. 1 représente une vue en coupe de côté d'un dispositif pour la détection de l'émission d'une particule cible;
- FIG. 2 représente une vue du dessus du dispositif de la FIG. 1 ;
- FIG. 3 représente une vue en coupe de côté d'un mode de réalisation particulier du dispositif de l'invention;
- FIG. 4 représente une vue photographique du dessus des sillons utilisés dans le mode de réalisation de la FIG. 3 ;
- FIG. 5 représente une vue schématique de la vue photographique de la FIG. 4 ;
- FIG. 6 à FIG. 8 représentent des vues en coupe de côté de modes de réalisation particuliers du dispositif de l'invention;
- FIG. 9 une vue du dessus d'un mode de réalisation particulier du dispositif de la FIG. 1.

Dans les figures des références identiques représentent des éléments techniques semblables.

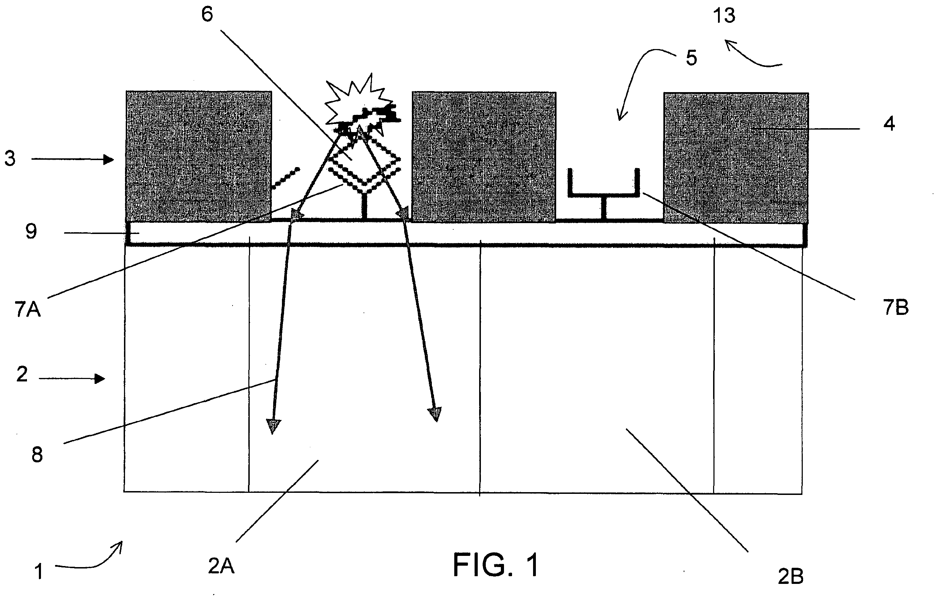

Illustré FIG. 1, un dispositif 1 convient pour détecter l'émission d'une particule 6.

La particule 6 peut être toute particule apte à émettre une lumière et notamment une particule fluorescente, nécessitant une excitation pour émettre une lumière, ou une particule chemiluminescente ou bioluminescente ne nécessitant pas d'excitation optique pour émettre une lumière. L'émission de lumière peut être due à l'émissivité thermique. Dans le cas d'une particule fluorescente, la fluorescence peut être une fluorescence paramétrique de type Rayleigh ou Hyper-Rayleigh, ou une fluorescence vibrationelle de type Raman spontanée ou stimulée.

Le dispositif 1 comprend un photo-détecteur 2, ayant une surface supérieure 9 transparente à la lumière émise par les particules 6. Des sondes 7A, 7B peuvent être fixées sur la surface supérieure 9 par greffage. Dans le cadre de tests biologiques, par exemple pour des puces à ADN, les sondes 7A, 7B, sont des molécules greffées sur la surface supérieure 9. Par hybridation, des particules cibles 6 s'associent sélectivement aux sondes 7A, 7B. L'émission des particules cibles 6 sélectivement hybridées peut alors être utilisée pour caractériser les particules cibles 6. De façon connue, par exemple pour des puces à ADN, on réalise donc des étapes de greffage des sondes 7A, 7B, d'hybridation des particules 6, de rinçage pour ne conserver que les particules sélectivement hybridées, et d'observation de la lumière émise par les particules 6 sélectivement hybridées.

Dans le cadre de l'invention, les étapes de greffage, hybridation peuvent être réalisées par des procédés connus. Par ailleurs, on décrit par la suite un dispositif comprenant des sondes greffées au voisinage de la surface sensible du photodétecteur et des particules hybridées sur la sonde, mais il est entendu qu'il est possible d'utiliser le dispositif indépendamment des sondes gréffées, les dispositifs de détections pouvant être vendus avec ou sans sondes greffées. Le dispositif 1 comprend un masque 3 recouvrant le photo-détecteur 2 au niveau de sa surface supérieure 9. Le masque 3 comprend des trous 5 et des zones opaques 4. Les zones opaques 4 sont opaques au rayonnement émis par les particules cibles 6. Afin de réaliser cette opacité, le masque 3 est par exemple un film métallique d'or ou d'aluminium, c'est-à-dire que les zones opaques 4 sont métalliques, en or ou en aluminium. Les trous 5 peuvent recevoir les sondes 7A, 7B et les laisser au sein du milieu d'analyse 13. Le film métallique percé de trous 5 est déposé sur le photodétecteur 2. L'opacité du film métallique 3 à la longueur d'onde d'émission des particules 6 peut être réalisé par un choix approprié de l'épaisseur du film.

Le photo-détecteur 2 est par exemple un semi-conducteur de type CMOS ou CCD. La structure du photo-détecteur 2 correspond par exemple à un dispositif appelé APS, acronyme pour « Active Pixel Sensor » ayant une zone active en silicium. La détection peut également être faite par amplification optique, ou amplification d'électrons par avalanche ou en cascade. Sur la FIG. 1, on a uniquement représenté une zone active du photo détecteur 2. Il est entendu que d'autres éléments non actifs peuvent compléter le photo-détecteur 2.

La zone active 2 de silicium du photo-détecteur 2 a un indice optique d'environ 3,5, qui est supérieur à l'indice optique du milieu d'analyse 13. Ce dernier a par exemple un indice optique de l'ordre de 1,33 comme de l'eau à 20°C, ou un indice d'environ 1 pour de l'air. Ce milieu d'analyse est connu dans le domaine de l'hybridation et de la détection de l'émission des particules cibles.

Lorsque des particules cibles 6 sont fixées sur les sondes 7A, 7B, l'effet de cette différence d'indice optique est de permettre une détection satisfaisante au niveau du photo-détecteur 2, par émission d'un signal dans le photo-détecteur 2. Les lois de Snell-Descartes ou la théorie de l'électromagnétisme permettent de confirmer cette affirmation.

Lors de l'émission des particules cible 6, la zone opaque 4 permet de confiner le signal 8 émis vers le photo-détecteur 2, de sorte que la détection est améliorée.

Le photo-détecteur 2 peut être découpé en pixels 2A, 2B correspondant à des unités de détection distinctes. Le photo-détecteur APS tel que mentionné ci-dessus, comprend par exemple une matrice de 640 × 480 pixels ayant une dimension de 5,6 micromètres par 5,6 micromètres.

Les trous 5 du masque 3 sont avantageusement placés au-dessus de chacun des pixels, et ont des dimensions inférieures aux dimensions des pixels
Dans le cas des dimensions de pixels susmentionnées, les trous ont par exemple des dimensions de l'ordre de quelques centaines de nanomètres par quelques centaines de nanomètres. Le masque 3 est dans ce cas un film métallique percé de nano-trous 5.

Les zones opaques 4 du film 3 confinent alors l'émission des particules cibles 6 vers chacun des pixels. Le signal 8 émis par une particule vers un pixel dévie peu vers le pixel adjacent de sorte que la diaphonie entre les pixels est réduite.

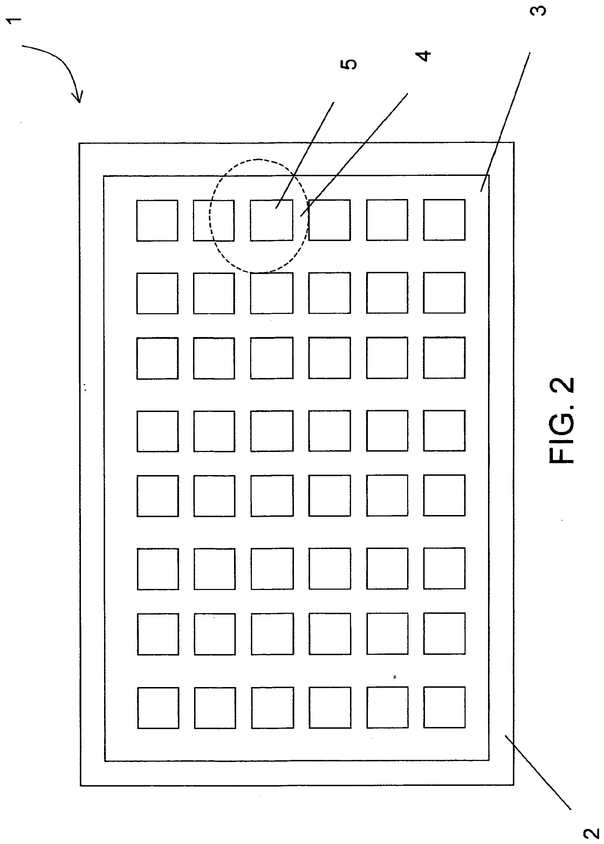

Une vue du dessus du dispositif 1 est illustrée FIG. 2. On y voit le masque métallique 3, recouvrant le photo-détecteur 2. Le masque 3 comprend des trous 5 et des zones opaques 4. La structure des zones opaques 4 sera décrite plus en détail par la suite dans un mode de réalisation particulier de l'invention.

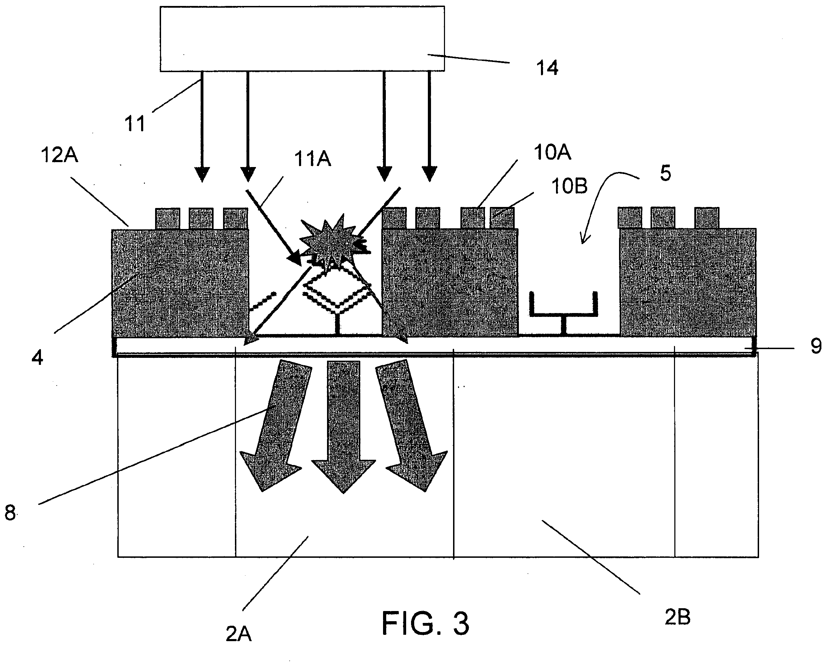

La FIG. 3 est une vue de côté du dispositif 1 selon un mode de réalisation particulier de l'invention, dans une première configuration. Sur la FIG. 3, la particule 6, hybridée à une sonde 7A est une particule fluorescente, excitée par un laser d'excitation 14 émettant un faisceau d'excitation 11, mais il est entendu que le mode de réalisation qui va être décrit peut être identique dans le cas d'une particule bioluminescente ou chemiluninescente. Dans le cas d'une excitation par un faisceau d'excitation 11, le film métallique 3 est de préférence également opaque aux longueurs d'onde du faisceau d'excitation.

Sur la FIG. 3, les zones opaques 4 comprennent un sillon 10 formé de zones basses 10B et de zones hautes 10A. Le sillon 10 forme de préférence une corrugation circulaire autour du trou 5. Les zones hautes 10A peuvent avoir une forme en créneau comme sur la FIG. 3, mais également une autre forme, comme par exemple une forme sinusoïdale ou triangulaire. Les zones hautes et basses 10A et 10B peuvent être agencées selon un espacement en progression linéaire ou non linéaire.

Le sillon 10 est positionné sur la surface supérieure de la zone opaque 4 par opposition à la surface latérale de la zone opaque formant le trou 5.

Selon ce mode de réalisation, le faisceau d'excitation 11 est intercepté par le sillon 10. Le sillon 10 est positionné à l'interface entre le milieu d'analyse 13 et la zone opaque 4. Le sillon 10 génère alors un mode par couplage de type plasmonique entre le milieu d'analyse 13 au contact du sillon, la zone opaque 4, qui confine le faisceau d'excitation 11 vers la particule 6. Ce phénomène de confinement est illustré par les flèches obliques 11A sur la FIG. 3. L'efficacité de l'excitation est donc améliorée dans ce mode de réalisation. Ce mode de réalisation est donc particulièrement avantageux dans le cas d'une particule fluorescente afin d'améliorer la qualité de l'excitation.

Par ailleurs, comme précédemment, la zone opaque 4 confine également la lumière émise vers le photodétecteur 2. L'ensemble améliore donc l'efficacité de l'excitation et de l'émission, et donc la qualité globale de la détection selon l'invention.

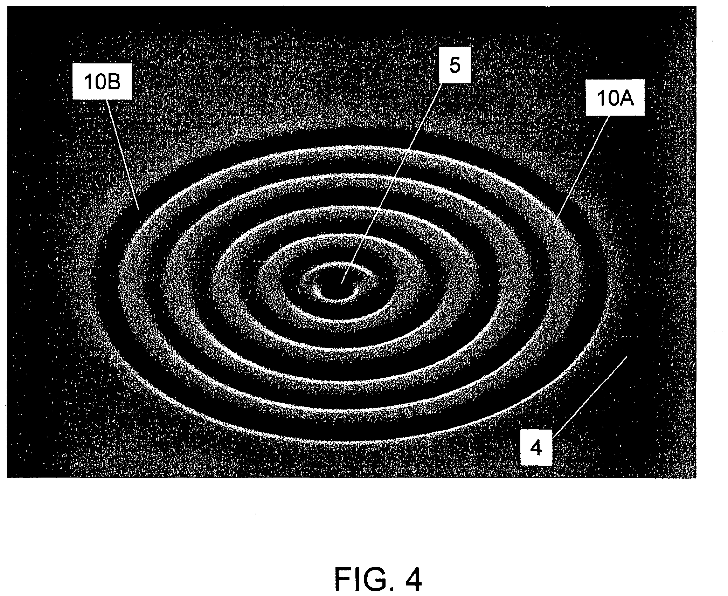

La FIG. 4 représente une représentation photographique du sillon 10 sur laquelle on reconnaît le trou 5, entouré par une succession de zones hautes 10A et de zones basses 10B. Le sillon est formé au niveau de la surface de la zone opaque 4.

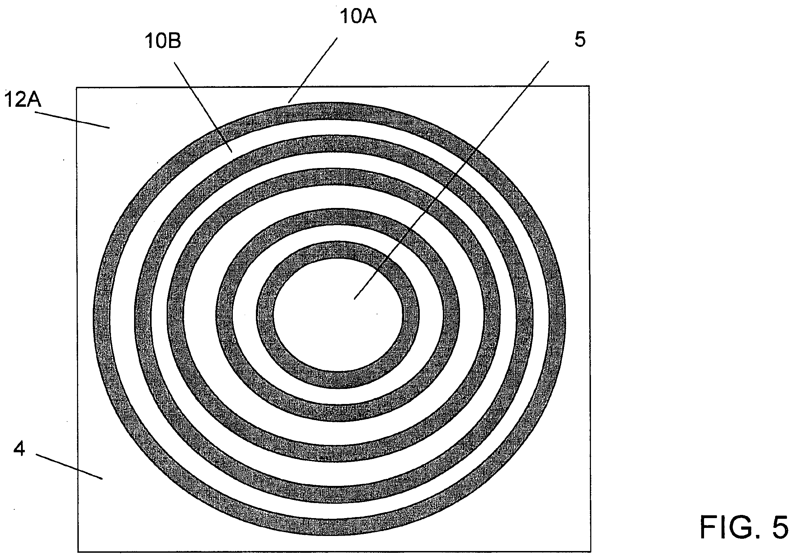

La FIG. 5 est une représentation schématique du sillon 10 sur laquelle on reconnaît le trou 5, entouré par une succession de zones hautes 10A et de zones basses 10B. Le sillon est formé au niveau de la surface supérieure 12A de la zone opaque 4.

On fournit un exemple de dimensionnement du masque 3 comprenant le sillon 10, étant entendu que ce dimensionnement n'est aucunement limitatif dans le cadre de l'invention. La longueur d'onde émise par la particule 6 est de l'ordre de 500 nanomètres. Le trou 5 est par exemple circulaire avec un diamètre de 150 à 200 nanomètres. La hauteur du masque 3 est supérieure à la hauteur de la sonde 7A, 7B de façon à ce que la zone opaque 4 masque bien la lumière émise par la particule 6 lorsqu'elle est fixée à la sonde 7A, 7B. La zone opaque 4, ou de façon équivalente, le trou 5, a donc une hauteur d'environ 200 nanomètres. Le sillon 10, c'est-à-dire les zones hautes 10A, ou de façon équivalente les zones basses 10B, a une hauteur d'environ 50 nanomètres. Le pas séparant les zones hautes des zones basses est environ de 80 nanomètres.

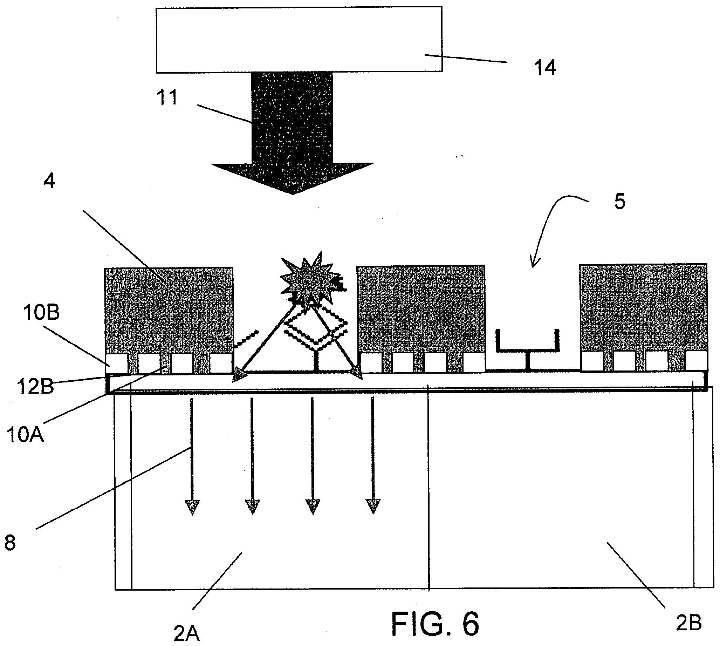

La FIG. 6 illustre une autre configuration du dispositif 1 selon l'invention dans lequel le sillon 10 est positionné à l'interface entre la zone opaque 4 et la surface supérieure 9 du photo-détecteur 2, au niveau de la surface inférieure 12B de la zone opaque 4. Le sillon 10 comprend comme précédemment des zones hautes 10A et des zones basses 10B. Cette fois, c'est surtout la directivité de la lumière émise par la particule 6 qui est améliorée. Ceci est valable que la particule 6 soit excitée ou non. Selon ce mode de réalisation, l'effet de couplage plasmonique par le sillon 10, entre la zone opaque 4 et le milieu d'analyse 13 au niveau du trou 5, permet un confinement amélioré de la lumière et une directivité accrue vers le photo-détecteur 2, et notamment vers le pixel 2A du photo-détecteur positionné sous le trou 5.

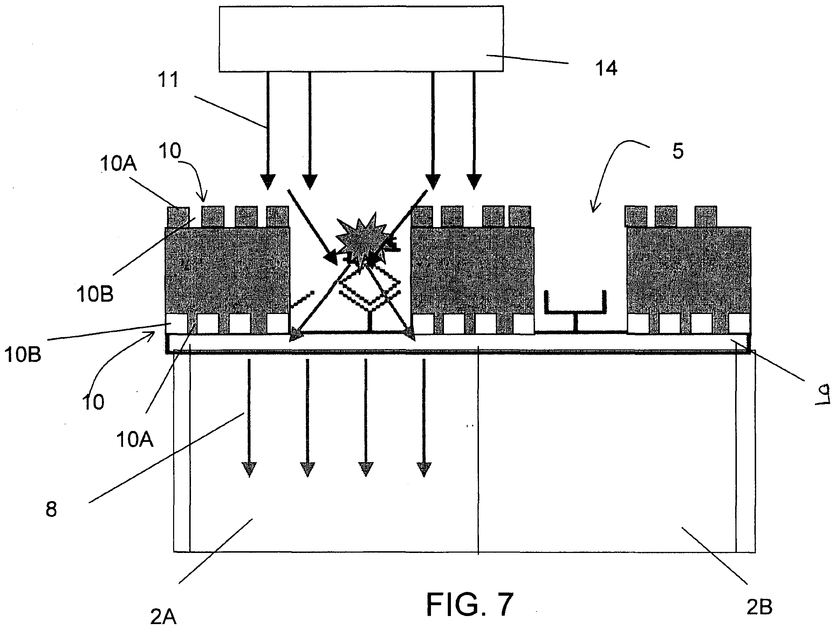

Illustré FIG. 7, les deux modes de réalisation précédemment décrits peuvent être combinés de sorte à améliorer à la fois la directivité de la lumière émise par la particule 6, et la directivité de l'excitation par le faisceau d'excitation 11. Dans ce cas, un premier sillon 10 est positionné à l'interface entre la zone opaque 4 et le milieu d'analyse 13, et un deuxième sillon 10 est positionné à l'interface entre la zone opaque 4 et la surface supérieure 9 du photo-détecteur 2. La surface supérieure 12A et la surface inférieure 12B de la zone opaque 4 comprennent donc chacun un sillon formant une corrugation circulaire autour du trou 5.

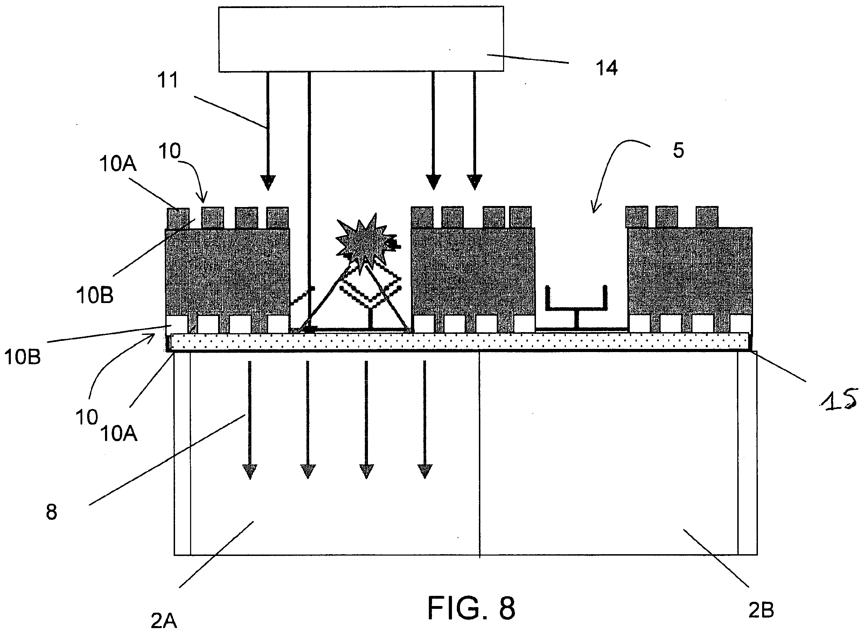

La FIG. 8 illustre un mode de réalisation particulier de l'invention dans lequel le dispositif 1 comprend un filtre réjecteur 15. Ce filtre réjecteur 15 est apte à filtrer la longueur d'onde ou la gamme de longueur d'onde du faisceau d'excitation 11 afin de ne pas perturber la détection de la lumière émise par la particule 6, lorsqu'elle est à une longueur d'onde différente. Le filtre réjecteur 15 peut former la surface supérieure du photo-détecteur 2 comme sur la FIG. 8, ou être positionné au contact de cette surface supérieure 9 ou même être inclut dans le photo-détecteur 2.

De façon alternative, de sorte à ne pas perturber la détection de la lumière émise par la particule 6, le photo-détecteur 2 lui-même est choisi de sorte à être insensible à la longueur d'onde ou à la gamme de longueur d'onde du faisceau d'excitation 11.

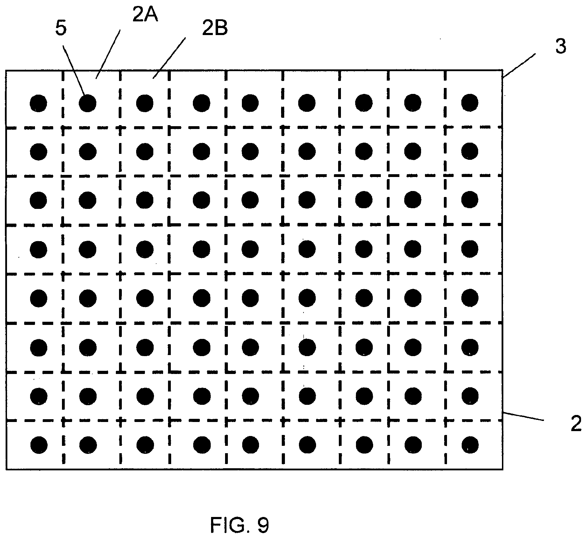

La FIG. 9 illustre une vue du dessus d'un mode de réalisation du dispositif 1 dans lequel on a illustré en pointillés la matrice de pixels 2A, 2B du photo-détecteur 2 sur lequel on a positionné le masque 3. De façon avantageuse, le masque 3 est tel qu'un unique trou 5 est positionné au regard de chaque pixel 2A, 2B. De la sorte, la diaphonie entre les pixels adjacents est réduite.

Par ailleurs, la dimension des trous 5 peut être telle qu'une seule sonde est positionnée dans le trou 5 lors du greffage. De la sorte, la lumière détectée par un pixel correspond sensiblement à la lumière émise par une unique particule, ce qui permet de s'affranchir des effets de moyennage.

Tous les modes de réalisation précédemment décrits peuvent alors être appliqués à une telle configuration dans laquelle le photo-détecteur 2 comprend une pluralité de pixels correspondant à une pluralité de photo-détecteurs en parallèles. En particulier, les modes de réalisation dans lesquels le masque 3 comprend des sillons 10 peut avantageusement être utilisé pour une matrice de pixels afin de diminuer la diaphonie entre les pixels.

Une telle matrice de pixels peut fonctionner en régime continu dans lequel on détecte le signal optique émis par les particules cibles 6 en intégrant le signal pour chaque pixel, ou groupe de pixels, du photo-détecteur 2. On peut également réaliser des mesures photométriques.

La matrice de pixels peut également fonctionner en régime impulsionnel dans lequel on intègre le signal sur des plages temporelles courtes devant le temps caractéristique du phénomène à étudier. L'analyse de la trace résultante donne alors des informations sur l'association moléculaire à étudier. Ce mode de fonctionnement est par exemple utilisé dans le cas de la spectroscopie à corrélation de fluorescence, de l'imagerie du temps de vie de fluorescence, ou du transfert d'énergie par résonance de fluorescence.

Le dispositif 1 tel que précédemment décrit peut être avantageusement utilisé en tant que détecteur dans une bio-puce, par exemple une bio-puce à ADN ou à protéine. Dans ce cas, la bio-puce comprend des sondes 7A, 7B greffées dans les trous 5 pour recevoir les particules cibles 6.

Il peut également être utilisé en tant que détecteur de présence bactérienne, par exemple pour des tests alimentaires.

## Revendications

1. Dispositif (1) pour la détection de l'émission d'une particule cible (6) à une longueur d'onde d'émission, ledit dispositif comprenant :
- un photo-détecteur (2, 2A, 2B) comprenant une surface sensible de détection de fort indice optique;
- ladite particule cible (6) pouvant être positionnée au voisinage de ladite surface sensible dans un milieu d'analyse (13) de faible indice optique pour une détection en champ proche de l'émission de la particule cible ;
ledit dispositif comprenant en outre :
- un masque métallique (3) recouvrant ladite surface sensible ;
- ledit masque comprenant au moins une zone opaque (4) à ladite longueur d'onde d'émission et au moins un trou (5) de diamètre inférieur à la longueur d'onde d'émission de la particule cible (6);
- ledit trou étant apte à recevoir ladite particule cible,
ledit masque comprenant des interfaces avec le milieu d'analyse et avec ladite surface sensible, où ladite au moins une zone opaque dudit masque comprend au moins un sillon (10, 10A, 10B) positionné au niveau d'au moins une desdites interfaces, chacun desdits au moins un sillon entourant chacun desdits au moins un trou.

2. Dispositif selon la revendication 1 dans lequel ledit sillon est positionné à l'interface entre ladite zone opaque et ledit milieu d'analyse.

3. Dispositif selon la revendication 1 dans lequel ledit sillon est positionné à l'interface entre ladite zone opaque et une surface dudit photo-détecteur.

4. Dispositif selon l'une des revendications précédentes dans lequel ledit photo-détecteur comprend une pluralité de pixels (2A, 2B), et dans lequel ledit au moins un trou (5) a une dimension inférieure à la dimension des pixels de ladite pluralité de pixels, et ledit masque est agencé par rapport audit photo-détecteur de sorte que chacun desdits au moins un trou soit positionné en regard d'un pixel de ladite pluralité de pixels.

5. Dispositif selon l'une des revendications précédentes dans lequel ladite particule cible est apte à émettre à ladite longueur d'onde d'émission lorsqu'elle est excitée par un faisceau d'excitation (11) émis par des moyens d'excitation (14) et ladite surface sensible est telle qu'elle est insensible audit faisceau d'excitation.

6. Dispositif selon la revendication 5 dans lequel ledit sillon est positionné dans le trajet dudit faisceau d'excitation.

7. Dispositif selon l'une des revendications précédentes 5 ou 6 dans lequel ledit dispositif comprend un filtre réjecteur (15) positionné entre lesdits moyens d'excitation et ladite surface sensible, ledit filtre réjecteur étant agencé pour rejeter les longueurs d'onde du faisceau d'excitation.

8. Dispositif selon la revendication précédente dans lequel ledit sillon est positionné à l'interface entre ladite zone opaque et ledit filtre réjecteur.

9. Dispositif selon l'une des revendications précédentes dans lequel ledit photo-détecteur est un semi-conducteur de silicium.

10. Bio-puce comprenant un dispositif selon l'une quelconque des revendications précédentes.

11. Bio-puce selon la revendication 10 comprenant au moins une sonde greffée audit photo-détecteur, ladite sonde étant positionnée dans ledit au moins un trou.

12. Bio-puce selon la revendication 11 dans laquelle chacun desdits au moins un trou comprend une unique sonde.

13. Bio-puce selon l'une des revendications 11 à 12 comprenant au moins une particule cible hybridée à ladite sonde.

14. Procédé de détection de l'émission d'une particule cible (6) à une longueur d'onde d'émission comprenant des étapes consistant à:
- fournir un dispositif selon l'une des revendications 1 à 9 ;
- positionner ladite particule dans ledit au moins un trou ;
- détecter l'émission de ladite particule à l'aide dudit photo-détecteur.

15. Procédé de détection de l'émission d'une particule cible selon la revendication précédente comprenant des étapes consistant à :
- greffer au moins une sonde dans ledit au moins un trou ;
- hybrider ladite particule cible sur ladite sonde de sorte à positionner ladite particule cible dans ledit trou.

## Patentansprüche

1. Vorrichtung (1) für das Nachweisen der Emission eines Zielpartikels (6) mit einer Emissionswellenlänge, wobei die Vorrichtung umfasst:
- einen Photodetektor (2, 2A, 2B), der eine empfindliche Nachweisfläche von hohem Brechungsindex umfasst;
- wobei das Zielpartikel (6) für einen Nahfeldnachweis der Emission des Zielpartikels in der Nähe der empfindlichen Fläche in einem Analysemedium (13) von niedrigem Brechungsindex positioniert sein kann;
wobei die Vorrichtung weiter umfasst:
- eine metallische Maske (3), die die empfindliche Fläche bedeckt;
- wobei die Maske mindestens einen für die Emissionswellenlänge undurchlässigen Bereich (4) und mindestens ein Loch (5) von kleinerem Durchmesser als die Emissionswellenlänge des Zielpartikels (6) umfasst;
- wobei das Loch in der Lage ist, das Zielpartikel aufzunehmen,
wobei die Maske Grenzflächen mit dem Analysemedium und mit der empfindlichen Fläche umfasst, wobei der mindestens eine undurchlässige Bereich der Maske mindestens einen Graben (10, 10A, 10B) umfasst, der auf der Ebene von mindestens einer der Grenzflächen positioniert ist, wobei jeder aus dem mindestens einen Graben jedes aus dem mindestens einen Loch umgibt.

2. Vorrichtung nach Anspruch 1, wobei der Graben an der Grenzfläche zwischen dem undurchlässigen Bereich und dem Analysemedium positioniert ist.

3. Vorrichtung nach Anspruch 1, wobei der Graben an der Grenzfläche zwischen dem undurchlässigen Bereich und einer Fläche des Photodetektors positioniert ist.

4. Vorrichtung nach einem der vorstehenden Ansprüche, wobei der Photodetektor eine Vielzahl von Pixeln (2A, 2B) umfasst, und wobei das mindestens eine Loch (5) eine kleinere Abmessung als die Abmessung der Pixel aus der Vielzahl von Pixeln aufweist, und wobei die Maske in Bezug auf den Photodetektor derart eingerichtet ist, dass jedes aus dem mindestens einen Loch einem Pixel aus der Vielzahl von Pixeln zugewandt positioniert ist.

5. Vorrichtung nach einem der vorstehenden Ansprüche, wobei das Zielpartikel in der Lage ist, die Emissionswellenlänge zu emittieren, wenn es von einem von Anregungsmitteln (14) emittierten Anregungsstrahl (11) angeregt wird, und die empfindliche Fläche so ist, dass sie für den Anregungsstrahl unempfindlich ist.

6. Vorrichtung nach Anspruch 5, wobei der Graben in der Bahn des Anregungsstrahls positioniert ist.

7. Vorrichtung nach einem der vorstehenden Ansprüche 5 oder 6, wobei die Vorrichtung einen Sperrfilter (15) umfasst, der zwischen den Anregungsmitteln und der empfindlichen Fläche positioniert ist, wobei der Sperrfilter dafür eingerichtet ist, die Wellenlängen des Anregungsstrahls zu sperren.

8. Vorrichtung nach dem vorstehenden Anspruch, wobei der Graben an der Grenzfläche zwischen dem undurchlässigen Bereich und dem Sperrfilter positioniert ist.

9. Vorrichtung nach einem der vorstehenden Ansprüche, wobei der Photodetektor ein Siliziumhalbeiter ist.

10. Biochip, der eine Vorrichtung nach einem der vorstehenden Ansprüche umfasst.

11. Biochip nach Anspruch 10, der mindestens eine auf den Photodetektor gepfropfte Sonde umfasst, wobei die Sonde in dem mindestens einen Loch positioniert ist.

12. Biochip nach Anspruch 11, wobei jedes aus dem mindestens einen Loch eine eindeutige Sonde umfasst.

13. Biochip nach einem der Ansprüche 11 bis 12, der mindestens ein an die Sonde hybridisiertes Zielpartikel umfasst.

14. Verfahren zum Nachweisen der Emission eines Zielpartikels (6) mit einer Emissionswellenlänge, umfassend Schritte, die bestehen im:
- Bereitstellen einer Vorrichtung nach einem der Ansprüche 1 bis 9;
- Positionieren des Partikels in dem mindestens einen Loch;
- Nachweisen der Emission des Partikels mithilfe des Photodetektors.

15. Verfahren zum Nachweisen der Emission eines Zielpartikels nach dem vorstehenden Anspruch, umfassend Schritte, die bestehen im:
- Pfropfen von mindestens einer Sonde in das mindestens eine Loch;
- Hybridisieren des Zielpartikels an die Sonde derart, dass das Zielpartikel in dem Loch positioniert wird.

## Claims

1. A device (1) for detecting the emission of a target particle (6) at an emission wavelength, said device comprising:
- a photo-detector (2, 2A, 2B) comprising a sensitive detection surface having a high optical index;
- said target particle (6) can be positioned in the vicinity of said sensitive surface in an analysis medium (13) having a low optical index for close field detection of the emission of the target particle;
said device further comprising:
- a metallic mask (3) covering said sensitive surface;
- said mask comprising at least one area (4) opaque at said emission wavelength and at least one hole (5) with a diamater smaller than the emission wavelength of the target particle (6);
- said hole being capable of receiving said target particle,
said mask comprising interfaces with the analysis medium and with said sensitive surface, wherein said opaque area of said mask comprises at least one groove (10, 10A, 10B) positioned at the level of at least one of said interfaces, each of said at least one groove surrounding each of said at least one hole.

2. A device according to claim 1, wherein said groove is positioned at the interface between said opaque area and said analysis medium.

3. A device according to claim 1, wherein said groove is positioned at the interface between said opaque area and a surface of said photo-detector.

4. A device according to one of the preceding claims, wherein said photo-detector comprises a plurality of pixels (2A, 2B) and wherein said at least one hole (5) has a dimension smaller than the dimension of the pixels of said plurality of pixels, and said mask is arranged with respect to said photo-detector so that each one of said at least one hole is positioned opposite a pixel of said plurality of pixels.

5. A device according to one of the preceding claims, wherein said target particle is able to emit at said emission wavelength when it is excited by an excitation beam (11) emitted by excitation means (14) and said sensitive surface is such that it is insensitive to said excitation beam.

6. A device according to claim 5, wherein said groove is positioned in the path of said excitation beam.

7. A device according to one of the preceding claims 5 or 6, wherein said device comprises a rejecting filter (15) positioned between such excitation means and said sensitive surface, such rejecting filter being arranged so as to reject the wavelength of the excitation beam.

8. A device according to the preceding claim, wherein said groove is positioned at the interface between said opaque area and said rejecting filter.

9. A device according to one of the preceding claims, wherein said photo-detector is a silicon semiconductor.

10. A bio-chip comprising a device according to any one of the preceding claims.

11. A bio-chip according to claim 10 comprising at least one probe grafted to said photo-detector, said probe being positioned in said at least one hole.

12. A bio-chip according to claim 11, wherein each of said at least one hole comprises a single probe.

13. A bio-chip according to one claims 11 to 12 comprising at least one target particle hybridized to said probe.

14. A method for detecting the emission of a target particle (6) at an emission wavelength comprising steps consisting in:
- providing a device according to one of claims 1 to 9;
- positioning said particle into said at least one hole;
- detecting the emission of said particle using said photo-detector.

15. A method for detecting the emission of a target particle according to the preceding claim, comprising steps consisting in:
- grafting at least one probe in said at least one hole;
- hybridizing said target particle onto said probe so as to position said target particle in said hole.
